# EUROPÄISCHE PATENTSCHRIFT

(11) **EP 0 569 915 B1**
(45) Veröffentlichungstag und Bekanntmachung des Hinweises auf die Patenterteilung: **11.10.1995**
(21) Anmeldenummer: 93107588.1
(22) Anmeldetag: 10.05.1993
(51) Int. Cl.: B60R 9/042, B60R 9/10

(54) **Dachträger**
Load carrier
Porte-bagages pour toit

(30) Priorität: 11.05.1992 DE 9206306 U
(43) Veröffentlichungstag der Anmeldung: 18.11.1993
(73) Patentinhaber: Buchholz, Franz, D-78730 Lauterbach (DE)
(72) Erfinder: Buchholz, Franz, D-78730 Lauterbach (DE)

(56) Entgegenhaltungen:
- DE-A- 3 215 476
- DE-A- 3 335 173
- DE-U- 9 006 224

## Beschreibung

Die Erfindung betrifft einen Dachträger für Kraftfahrzeuge zur Aufnahme von Lasten, insbesondere von Fahrrädern, gemäß dem Oberbegriff des Anspruchs 1.

Ein derartiger Dachträger ist beispielsweise aus dem deutschen Gebrauchsmuster 88 05 981.2 bekannt. Die am Dach des Fahrzeugs befestigten Traversen weisen Auszüge nach Art eines Teleskops auf, an deren Ende jeweils ein schwenkbarer Tragbügel befestigt ist. An den Tragbügeln sind verstellbare Tragstäbe angeordnet, auf denen die Befestigungselemte für die Fahrräder angebracht sind.

Zum Beladen werden die an den Traversen befestigten Auszüge ausgezogen und die Traubügel ausgeklappt. Danach wird das Fahrrad angehoben und beispielsweise mit Lenker und Sattel an den Aufnahmeorganen befestigt. Danach wird der Tragbügel und mit ihm das Fahrrad um etwa 180° nach oben verschwenkt und die Auszüge zur Dachmitte hin eingeschoben.

Gegenüber herkömmlichen Systemen ergibt sich bei der Handhabung zwar dadurch eine Erleichterung, daß die Befestigung des Fahrrads am Dachträger neben dem Kraftfahrzeug erfolgen kann und das Fahrrad nicht mehr unter hoher Kraftanstrengung auf den auf dem Dach befestigten Dachträger angehoben werden muß.

Nachteilig bei dieser Konstruktion ist jedoch, daß sie wegen der teleskopartigen Auszüge mechanisch kompliziert aufgebaut ist. Zusätzlich erhöht sich hierdurch das Eigengewicht des Dachträgers, wodurch im gleichen Maße die zur Verfügung stehende Nutzlast reduziert wird. Auch muß weiterhin das Fahrrad vollständig vom Boden hochgehoben werden, um es beispielsweise mit Lenker und Sattel in die Aufnahmeorgane einzuführen und zu befestigen, die sich etwas oberhalb der Dachkante des Kraftfahrzeugs befinden. Dies ist ergonomisch äußerst ungünstig, da Lenker und Sattel bei vollständig angehobenem Fahrrad an den Aufnahmeorganen befestigt werden müssen. Neben der Kraftanstrengung des Anhebens ist ein konzentriertes Positionieren erforderlich, der Beladevorgang ist deshalb von einer Person alleine kaum durchführbar.

Schließlich ist die Bedienung kompliziert, da verschiedene Sperren eingelegt bzw. gelöst werden müssen, um eine ungewollte Betätigung des teleskopartigen Auszugs während des Be- und Entladevorgangs zu vermeiden. Fehlbedienungen lassen sich nicht mit der erforderlichen Sicherheit vermeiden, die Gefahr einer Verletzung der Bedienungperson oder der Beschädigung des Kraftfahrzeugs sind gegeben.

Der Erfindung lag daher das Problem zugrunde, einen Dachträger der eingangs genannten Art zur Verfügung zu stellen, der die geschilderten Nachteile nicht mehr aufweist. Insbesondere soll er konstruktiv einfach gestaltet sein und eine leichte und sichere Bedienung durch eine Einzelperson ermöglichen.

Gelöst wird dieses Problem durch einen Dachträger, der die Merkmale des Anspruchs 1 aufweist.

Vorteilhafte Ausgestaltungen des Dachträgers sind in den Merkmalen der Unteransprüche angegeben.

Der Erfindung liegt die Idee zugrunde, die die Aufnahmeorgane halternden Tragbügel über ein einfaches Schwenkgelenk mit den Traversen zu verbinden, wobei das Schwenkgelenk im Bezug auf die Dachkante seitlich und nach unten versetzt ist, wodurch der Tragbügel und damit die auf ihm angebrachten Aufnahmeorgane für das Fahrrad eine Höhe einnehmen, die in etwa mit der Höhe der Aufnahmepunkte am Fahrrad, beispielsweise des Lenkers und des Sattels, korrespondiert.

Hierdurch vereinfacht sich erheblich der Konstruktionsaufwand, da der Dachträger an den Enden der Traversen lediglich Schwenkgelenke aufweist, über die ein einfach gestalteter Schwenkbügel angebracht ist. Auch ergeben sich weitere Vorteile in der Bedienung, da durch die Herabverlagerung der Schwenkachse die Aufnahmeorgane für das Fahrrad so tief herabgeführt werden können, so daß das Fahrrad nicht mehr als Ganzes, sondern lediglich am Lenker bzw. am Sattel geringfügig angehoben werden muß, um die Befestigung zu ermöglichen.

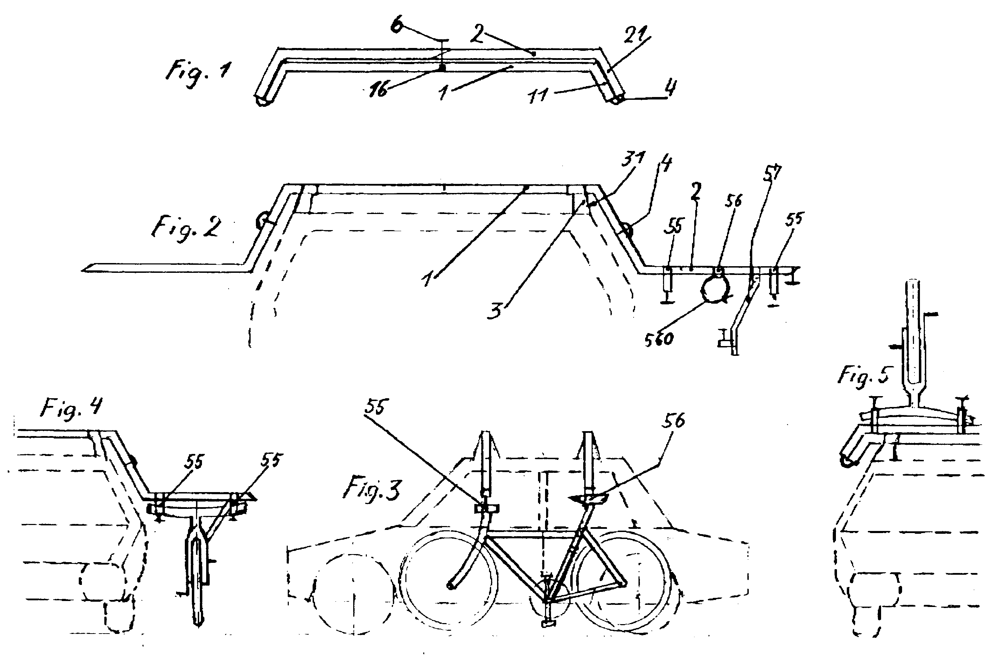

Der Erfindung wird näher anhand der in den Figuren dargestellten Ausführungsbeispiele erläutert. Es zeigen in vereinfachter und schematisierter Darstellung
- Figur 1: Vorderansicht des Dachträgers mit geschlossenen Tragbügeln,
- Figur 2: Vorderansicht des Dachträgers mit geöffneten Tragbügeln,
- Figur 3: Seitenansicht des Dachträgers mit herabgeschwenkten Tragbügeln mit befestigtem Fahrrad, Kraftfahrzeug angedeutet,
- Figur 4: Vorderansicht (Teilansicht) von Figur 3,
- Figur 5: Vorderansicht (Teilansicht) des Dachträgers im geschlossenen Zustand, mit befestigtem Fahrrad, Kraftfahrzeug angedeutet,
- Figur 6: Seitenansicht einer Variante des Dachträgers für den stehenden Transport von Fahrrädern mit herabgeschwenkten Tragbügeln, mit befestigtem Fahrrad, Kraftfahrzeug angedeutet,
- Figur 7: Vorderansicht (Teilansicht) gemäß Figur 6,
- Figur 8: Vorderansicht (Teilansicht) der Ausführungsvariante gemäß Figur 6 und 7 mit geschlossenen Tragbügeln,
- Figur 9: Halterung für den Lenker,

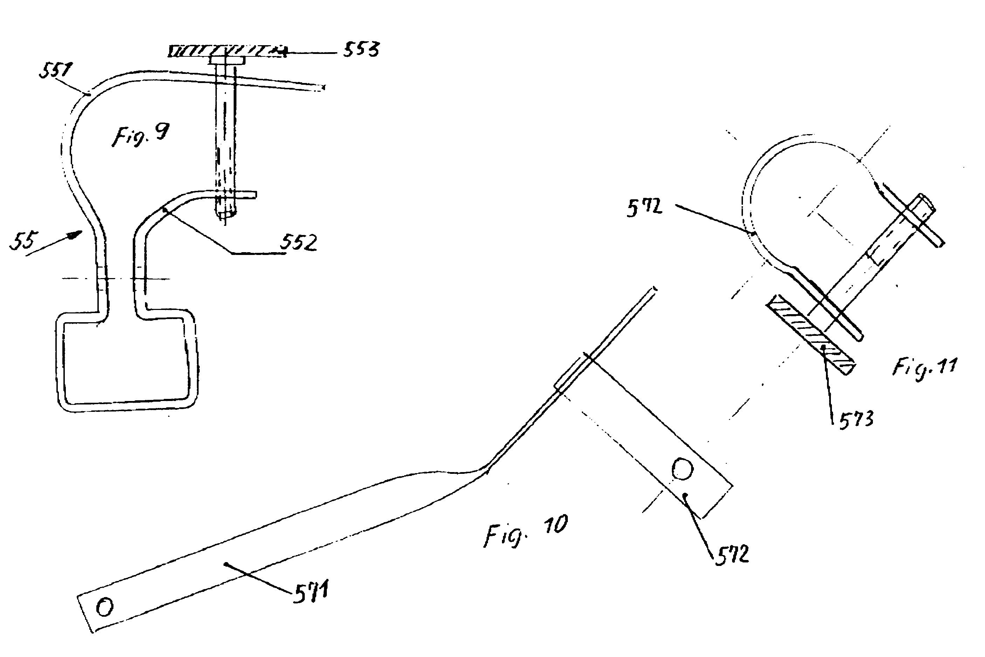

- Figur 10: Halterung für den Rahmen, sowie
- Figur 11: Seitenansicht (Teilansicht) Figur 10.

Der Dachträger weist zumindest zwei Traversen 1 auf, die im Bereich des Dachs des Kraftfahrzeugs mit Klemmstützen 3 befestigt sind. Mit den Traversen 1 sind Tragbügel 2 über ein Schwenkgelenk 4 beweglich verbunden. Die Tragbügel 2 sind mit Aufnahmeorganen 50, 51, 52, 55, 56, 57, versehen, die die Last, insbesondere Fahrräder, aufnehmen. Im geschlossenen Zustand verlaufen die Tragbügel 2 annähernd parallel zu den Traversen 1.

Sowohl die Traversen 1 als auch die Tragbügel 2 überragen die Klemmstützen 3 seitlich nach außen. Die Endabschnitte der Traversen 1 sind in Form von Schenkeln 11, 21 abknickend nach unten gerichtet. Das Schwenkgelenk 4, das die Traverse 1 mit dem Tragbügel 2 verbindet, ist jeweils am unteren Ende der Schenkel 11, 21, also am tiefsten Punkt angebracht. Hierdurch wird erreicht, daß im geöffneten, herabgeschwenkten Zustand die Tragbügel 2 tiefer liegen als die Traversen 1. Die Höhendifferenz zwischen den Traversen 1 und den Tragbügeln 2 im herabgeschwenkten Zustand beträgt in etwa das doppelte der Länge der Schenkel 11, 21.

Bevorzugt sind die Schenkel 11, 21 seitlich um das Dach des Kraftfahrzeugs herumgeführt. Auf diese Weise gelingt es, die Traversen 1 in relativ geringem Abstand zum Dach des Kraftfahrzeugs zu führen und gleichzeitig die gewünschte Absenkung des Tragbügels 2 in geöffnetem Zustand herbeizuführen. Bei Traversen 1, die im Schwenkbereich von Seitentüren angebracht sind, ist darauf zu achten, daß die jeweiligen, u das Dach des Kraftfahrzeugs herumgeführten Schenkel 11, 21 einschließlich der an ihrem unteren Ende befestigten Schwenkgelenke 4 lediglich so tief angeordnet sind, daß sie das Öffnen bzw. Schließen der Tür nicht behindern, d.h. sie müssen zumindest knapp oberhalb jener Ebene enden, die durch die Oberkante der Tür bei deren Schwenkbewegung bestrichen wird. Insbesondere bei Kraftfahrzeugen älterer Bauart, bei denen die Klemmstützen 3 an der Regenrinne befestigt werden, liegt diese Ebene beinahe in der Höhe der Dachkante. Um dennoch die gewünschte Absenkung des Tragbügels 2 zu erzielen ist es erforderlich, die Höhe der Klemmstützen 3 zu vergrößern, so daß sich die Länge der Schenkel 11, 21 in der gewünschten Weise erhöht. Es ist auch möglich, alleine den Schenkel 21 des Tragbügels 2 zu erhöhen. In diesem Fall läßt sich im geschlossenen Zustand keine unmittelbare Auflage und damit auch keine Abstützung des Tragbügels 2 auf der Traverse 1 erreichen, vielmehr muß auf andere Art und Weise eine entsprechende Abstützung, z.B. in Form von hier nicht dargestellten Abstandshaltern vorgesehen sein.

Vorteilhafterweise sind die Traversen 1 zweigeteilt ausgeführt und deren Hälften lösbar miteinander verbunden. Hierdurch läßt sich beispielsweise die Montage dadurch erleichtern, daß die Traversenhälften jeweils durch Durchgangsöffnungen 31 der Klemmstützen 3 hindurchgeführt werden können. Somit ist es möglich, bereits vorhandene und auf den jeweiligen Fahrzeugtyp abgestimmte Klemmstützen 3 für die Aufnahme der Traversen 1 weiter zu verwenden, sofern die Klemmstützen 3 mit Durchgangsöffnungen 31 versehen sind, in denen die Traversen 1 gelagert sind.

Sind derartige Durchgangsöffnungen 31 nicht vorhanden, weil beispielsweise die Klemmstützen 3 endseitig geschlossen sind, so läßt sich gegebenenfalls der Dachträger komplett auf einen bereits vorhandenen Grundträger aufsetzen sofern an den Traversen 1 entsprechende Befestigungselemte zur Anbringung am Grundträger vorhanden sind. Auch ist die Befestigung an gekürzten Traversen oder Traversenenden möglich.

Die beiden auf der Traverse 1 angeordneten Tragbügel 2 werden im geschlossenen Zustand, d.h. in Transportstellung, durch ein gemeinsames Sicherungselement gesichert. Das gemeinsame Sicherungselement besteht beispielsweise aus einer Knebelschraube 6, die durch die beiden Tragbügel 2 hindurchgeführt ist und in eine an der Traverse 1 angeordnete Gewindebohrung 16 eingreift. Ebenso können andere Sicherungselemente, beispielsweise in Form eines Schnell- oder Bajonettverschlusses vorgesehen sein.

Zu Vermeidung von Beschädigungen am Fahrzeugs während des Be- und Entladevorgangs hat es sich als zweckmäßig erwiesen, das Schwenkgelenk 4 mit einem Anschlag zu versehen, der den maximalen Öffnungswinkel begrenzt. Als maximaler Öffnungswinkel ist in der Regel der Winkel gewählt, bei dem im geöffneten und herabgeschwenkten Zustand der Tragbügel 2 in etwa horizontal verläuft.

Aus Stabilitätsgründen ist es von Vorteil, das Schwenkgelenk 4 zusätzlich über die Klemmstütze 3 abzustützen. Dies kann entweder dadurch erfolgen, daß die Traverse 1 mit ihrem Schenkel 11 in der Nähe des Schwenkgelenks 4 mit der Klemmstütze 3 verbunden ist. Es kann aber auch das Schwenkgelenk 4 unmittelbar an der Klemmstütze 3 angebracht sein, wodurch der Schenkel 11 der Traverse vollständig entfallen kann, sofern die Klemmstütze 3 eine ausreichende Eigenstabilität aufweist.

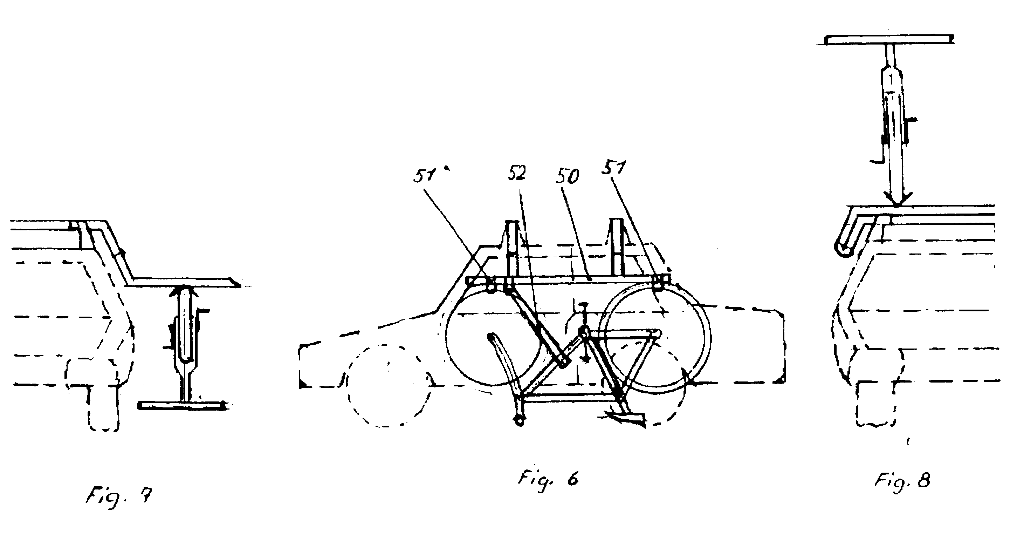

Entsprechend dem Ausführungsbeispiel gemäß Figur 6 bis 8 können die Aufnahmeorgane für das Fahrrad als Halterungen für das Vorder- und Hinterrad 51 sowie als Halterung für den Rahmen 52 ausgebildet sein. Zum Beladen ist hierzu das Fahrrad auf Lenker und Sattel zu stellen und mit den Aufnahmeorganen zu verbinden. Als Halterungen für das Vorder- und Hinterrad 51 können beispielsweise handelsübliche Rinnen 50 verwendet werden, die mit den Tragbügeln 2 verbunden sind und Halterungen für das Vorder- und Hinterrad 51 aufnehmen.

Eine derartige Konfiguration hat den Vorteil, daß Fahrräder verschiedener Abmessungen ohne Versetzen der Traversen 2 aufgenommen werden können. Auch erlaubt sie den gleichzeitigen Transport von bis zu vier Fahrrädern, sofern die Fahrräder abwechselnd - in Fahrtrichtung des Kraftfahrzeugs gesehen - längsversetzt und gegebenfalls abwechselnd nach vorne und hinten ausgerichtet befestigt werden.

Ein sonders einfacher Be- und Entladevorgang läßt sich dadurch realisieren, daß die Aufnahmeorgane für das Fahrrad als Halterungen für den Lenker 55 und als Halterung für den Sattel 56 ausgebildet sind. Das Fahrrad braucht zur Befestigung an den Ausnahmeorganen nicht mehr gewendet werden, sondern kann unmittelbar neben das Kraftfahrzeug geschoben und an den Aufnahmeorganen der herabgeschwenkten Tragbügel 2 befestigt werden. Zur Erhöhung der Stabilität während des Transports ist eine zusätzliche Halterung für den Rahmen 57 vorgesehen. Diese besteht beispielsweise aus einem Schwenkarm 571, an dem eine Rahmenschelle 572 befestigt ist. Die Rahmenschelle 572 umfaßt den Rahmen vorzugsweise am Sattelrohr und wird durch eine Knebelschraube 573 zur Erzeugung der gewünschten Klemmwirkung zusammengedrückt.

Zur vereinfachten Befestigung des Lenkers bestehen die Halterungen für den Lenker 55 aus elastisch nachgebenden Haltebügeln 551, 552, in die der Lenker gegebenenfalls durch leichtes Anheben einführbar ist. Die Haltebügel 551, 552 sind deshalb so gestaltet, daß sie in etwa parallel auslaufen und auf diese Weise eine Einführöffnung für das Lenkerrohr bilden. Der Haltebügel 551 weist einen kreisbogenförmigen Abschnitt auf, der als Anschlag für das einzuschiebende Lenkerrohr dient und an dessen Außendurchmesser in etwa angepaßt ist. Die elastisch nachgebende Eigenschaft der Haltebügel 551, 552 bewirkt, daß das Lenkerrohr bereits unmittelbar nach dem Einschieben in die Halterung 55 unter der Vorspannung der beiden Haltebügel 551, 552 vorfixiert ist, bevor mit der Knebelschraube 553 die entgültige Klemmwirkung erzeugt wird.

Als Halterung für den Sattel 56 ist eine verstellbare Halteschlaufe 560 vorgesehen. Durch Verlängern läßt sich diese um den Sattel des auf dem Boden stehenden Rades führen. Durch anschließendes Verkürzen wird das Fahrrad am Sattel hochgehoben und gegen einen hier nicht näher dargestellten Anlagepunkt gedrückt.

## Patentansprüche

1. Dachträger für Kraftfahrzeuge zur Aufnahme von Lasten insbesondere von Fahrrädern, bestehend wenigstens aus zwei, im Bereich des Dachs des Kraftfahrzeugs mit Klemmstützen befestigbaren Traversen, sowie mit diesen jeweils seitlich über ein Schwenkgelenk verbundenen Tragbügeln, welche mit Aufnahmeorganen für die Last versehen sind, und im geschlossenen Zustand annähernd parallel zu den Traversen verlaufen, dadurch gekennzeichnet, daß die Traversen (1) und die Tragbügel (2) die Klemmstützen (3) seitlich nach außen überragen und ihre Endabschnitte in Form von Schenkeln (11,21) nach unten abknickend verlaufen und daß das Schwenkgelenk (4) jeweils am unteren Ende des Schenkels (11,21) angebracht ist.

2. Dachträger nach Anspruch 1, dadurch gekennzeichnet, daß die Schenkel (11,21,) seitlich um das Dach des Kraftfahrzeugs herum geführt sind.

3. Dachständer nach einem der vorstehenden Ansprüche, dadurch gekennzeichnet, daß die Länge der Schenkel (11,21) und die Höhe der Klemmstützen (3) so bemessen ist, daß sich bei herabgeschwenkten Tragbügeln (2) die Aufnahmeorgane für das Fahrrad in einer Höhe über dem Boden befinden, die nur unwesentlich größer ist als der Abstand der zugehörigen Aufnahmepunkte des Fahrrads vom Boden.

4. Dachträger nach einem der vorstehenden Ansprüche, dadurch gekennzeichnet, daß die Traversen (1) jeweils zweigeteilt sind.

5. Dachträger nach einem der vorstehenden Ansprüche, dadurch gekennzeichnet, daß die Klemmstützen (3) Durchgangsöffnungen (31) aufweisen, in denen die Traversen (1) gelagert sind.

6. Dachträger nach einem der vorstehenden Ansprüche, dadurch gekennzeichnet, daß beide, an der Traverse (1) angeordnete Tragbügel (2) in Transportstellung durch ein gemeinsames Sicherungselement gesichert sind.

7. Dachträger nach Anspruch 6, dadurch gekennzeichnet, daß das gemeinsame Sicherungselement eine Knebelschraube (6) ist, die durch die beiden Tragbügel (2) hindurchgeführt ist und in eine an der Traverse (1) angeordneten Gewindebohrung (16) eingreift.

8. Dachträger nach einem der vorstehenden Ansprüche, dadurch gekennzeichnet, daß das Schwenkgelenk (4) mit einem den maximalen Öffnungswinkel begrenzenden Anschlag versehen ist.

9. Dachträger nach einem der vorstehenden Ansprüche, dadurch gekennzeichnet, daß das Schwenkgelenk (4) unmittelbar an der Klemmstütze (3) angebracht ist.

10. Dachträger nach einem der vorstehenden Ansprüche, dadurch gekennzeichnet, daß die Aufnahmeorgane für das Fahrrad als Halterungen für das Vorder- und Hinterrad (51) sowie als Halterung für den Rahmen (52) ausgebildet sind.

## Claims

1. Load carrier for motor vehicles to transport loads, especially bicycles, consisting of at least two cross-bars, which are fixed with support legs in the range of the roof of the motor vehicle, these cross-bars are connected upon a swivel joint with carrier bows, these carrier bows are provided with fastening parts for the load and these carrier bows in closed position are nearly running parallel to the cross-bars, characterized in that way, that the cross-bars (1) and the carrier bows (2) rise above the support legs (3) sidewards and outwards and their endings in the shape of arms (11, 21) are bended downwards and that the swivel joint (4) is connected with the lower end of the arms (11, 21).

2. Load carrier according to claim 1, characterized in that way, that the arms (11,21) are led sideways around the roof of the motor vehicle.

3. Load carrier according to one of the preceding claims, characterized in that way, that the length of the arms (11,21) and the height of the support leg (3) is measured as follows: when the carrier bows (2) are swung down, the fastening parts for the bicycle are in a height above ground, which is insignificant greater than the distance of the bicycles 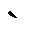 pick-up-points from the ground.

4. Load carrier according to one of the preceding claims, characterized in that way, that the cross-bars (1) are devided.

5. Load carrier according to one of the preceding claims, characterized in that way, that the support legs (3) have bores in which the cross-bars (1) are beded.

6. Load carrier according to one of the preceding claims, characterized in that way, that the two carrier bows (2) which are connected with the cross-bars (1), are secured by a common safety bar during transport.

7. Load carrier according to claim 6, characterized in that way, that the safety bar is a handle screw (6) which is led through both carrier bows and which gears into a drill hole fixed on cross bar (1).

8. Load carrier according to one of the preceding claims, characterized in that way, that the swivel joint (4) has a stop which reduces the maximum angle of spread.

9. Load carrier according to one of the preceding claims, characterized in that way, that the swivel joint (4) is directly connected with the support leg (3).

10. Load carrier according to one of the preceding claims, characterized in that way, that the fastening parts for the bicycle are constructed as a holder for the front wheel and rear wheel (51) as well as for the main frame (52).

## Revendications

1. Galerie à chargement pour automobiles, plus particulièrement destinée à transporter des cycles comprenant:
- au moins deux traverses fixées sur le toit de l'automobile à l'aide de patins agrafe ainsi que
- deux bras support liés aux traverses par des articulations,
- les bras support étant équipés d'éléments de fixation et parallèles aux traverses à l'état fermé,
- la galerie étant caractérisée par le fait que les traverses 1 et les bras support 2 dépassent latéralement les patins agrafe 3 et que leurs extrémités sont pliées vers le bas en forme de branche 11, 21 et que l'articulation 4 se trouve à l'extrémité basse de la branche 11, 21.

2. Galerie pour automobile selon revendication 1, caractérisée par le fait que les branches 11, 21 suivent les côtés du toit.

3. Galerie pour automobile selon une des revendications ci-dessus, caractérisée par le fait que la longueur des branches 11, 21 et la hauteur des patins agrafe 3 sont telles que, lorsque les bras support 2 sont déployés, les éléments de fixations se trouvent à une hauteur du sol peu supérieure à la distance des points d'attaches du cycle au sol.

4. Galerie pour automobile selon une des revendications ci-dessus, caractérisée par ses traverses 1 en deux parties détachables.

5. Galerie pour automobile selon une des revendications ci-dessus, caractérisée par le fait que les patins agrafe 3 sont munies d'orifices 31 dans lesquels sont logées les traverses.

6. Galerie pour automobile selon une des revendications ci-dessus, caractérisée par le fait que les deux bras support 2 posés sur la traverse 1, sont verrouillés par un dispositif de sécurité commun lors du transport.

7. Galerie pour automobile selon revendication 6, caractérisée par le fait que le dispositif de sécurité commun est une vis à tête moletée 6, traversant les deux bras support 2 et pénétrant dans un logement fileté dans la traverse 1.

8. Galerie pour automobile selon une des revendications ci-dessus, caractérisée par le fait que l'articulation décrit un angle maximal limité par une butée d'arrêt.

9. Galerie pour automobile selon une des revendications ci-dessus, caractérisée par le fait que l'articulation 4 est fixé directement sur le patin agrafe 3.

10. Galerie pour automobile selon une des revendications ci-dessus, caractérisée par le fait que les éléments de fixation pour le cycle sont conçus comme attaches pour les roues avant et arrière 51 et comme attache pour le cadre 52 du cycle.
